# EUROPÄISCHE PATENTSCHRIFT

(11) **EP 2 577 851 B1**
(45) Veröffentlichungstag und Bekanntmachung des Hinweises auf die Patenterteilung: **28.01.2015**
(21) Anmeldenummer: 11714297.6
(22) Anmeldetag: 14.04.2011
(51) Int. Cl.: H02K 13/04, H01R 39/32

(54) **ROTOR MIT ELEKTRISCHER KLEMMVERBINDUNG**
ROTOR COMPRISING AN ELECTRICAL CLAMP CONNECTION
ROTOR À RACCORDEMENT ÉLECTRIQUE PAR SERRAGE

(30) Priorität: 01.06.2010 DE 102010029543
(43) Veröffentlichungstag der Anmeldung: 10.04.2013
(73) Patentinhaber: Robert Bosch GmbH, 70442 Stuttgart (DE)
(72) Erfinder: BAUER, Bertram, 76571 Gaggenau (DE); ERNZER, Marc, 76547 Sinzheim (DE)
(86) Internationale Anmeldenummer: PCT/EP2011/055877
(87) Internationale Veröffentlichungsnummer: WO 2011/151100

(56) Entgegenhaltungen:
- EP-A1- 1 363 365

## Beschreibung

### Stand der Technik

Kommutierte Elektromotoren umfassen einen Kommutator, der einen Stromfluss zwischen einem Stator und einem Rotor des Elektromotors herstellt, während sich der Rotor gegenüber dem Stator dreht. Befindet sich eine Spulenwicklung zur Erzeugung eines magnetischen Feldes auf dem Rotor, so wird eine elektrische Verbindung zwischen einem Spulendraht der Spulenwicklung und dem Kommutator aus Fertigungsgründen häufig mittels eines Kontaktelements hergestellt, welches eine Schneid-Klemm-Verbindung zum Spulendraht herstellt. Dazu weist das Kontaktelement eine V-förmige Öffnung zur Aufnahme des Spulendrahtes auf. Flanken der Öffnung sind mit einer Schneide versehen, so dass der Spulendraht, der in die sich verjüngende V-förmige Öffnung eingeführt wird, an der Schneide entlang geführt wird. Eine Isolation des Wicklungsdrahtes wird dabei von der Schneide durchtrennt und der Wicklungsdraht gleichzeitig zwischen den Flanken der Öffnung elektrisch leitend eingeklemmt.

In EP 1 363 365 B1 ist ein kommutierter Elektromotor mit Schneid-Klemm-Verbindungen gezeigt.

Bekannte Schneid-Klemm-Verbindungen können nur mit einem Wicklungsdraht verwendet werden, dessen Durchmesser in einem engen Toleranzbereich liegt. Wird dieser Toleranzbereich verlassen, beispielsweise durch Einsatz eines schwächeren oder stärkeren Wicklungsdrahts, so kann die Kontaktierung an dem Kontaktelement während des Betriebs des Elektromotors schadhaft werden, wodurch hohe Reparaturkosten entstehen können.

Der Erfindung liegt daher die Aufgabe zugrunde, einen Rotor für einen Elektromotor bereitzustellen, der ein verbessertes Kontaktelement umfasst. Eine weitere Aufgabe der Erfindung besteht darin, ein Verfahren zur Montage des Rotors anzugeben.

### Offenbarung der Erfindung

Die Erfindung löst diese Probleme mittels eines Rotors mit den Merkmalen des Anspruchs 1 und mittels eines Verfahrens mit den Merkmalen des Anspruchs 8. Unteransprüche geben bevorzugte Ausführungsformen an.

Nach einem ersten Aspekt umfasst ein Rotor eines Elektromotors einen Kommutator mit einem Leitsegment, eine Wicklung mit einem Wicklungsdraht, der in einem Anschlussbereich der Wicklung in axialer Richtung des Rotors verläuft, und ein Kontaktelement zur elektrischen Verbindung des Leitsegments mit dem Wicklungsdraht. Das Kontaktelement umfasst eine längsgeschlitzte Hülse mit zwei gegenüber liegenden Schenkeln, zwischen denen der Wicklungsdraht aufgenommen ist.

Das hülsenförmige Kontaktelement weist eine relativ niedrige Federkonstante bezüglich seiner beiden Schenkel auf, so dass durch die Federwirkung des Kontaktelements zwischen den Schenkeln vergleichbare Kräfte bei unterschiedlichen Abständen der Schenkel herrschen. Dadurch können Wicklungsdrähte unterschiedlicher Durchmesser vom Kontaktelement sicher gehalten werden. Dies ermöglicht eine universelle Verwendung des Kontaktelements und den Einsatz eines Wicklungsdrahts mit einer größeren Toleranz bezüglich seines Durchmessers. Außerdem kann durch die flache Federkennlinie eine Vibrationsfestigkeit der Verbindung zwischen dem Kontaktelement und dem Wicklungsdraht erhöht sein.

Vorzugsweise umläuft der Wicklungsdraht im Bereich des Kontaktelements ein Widerlager, an das die Schenkel den Wicklungsdraht pressen. Die elektrische Verbindung zwischen dem Wicklungsdraht und dem Kontaktelement kann dadurch bezüglich zweier unterschiedlicher Abschnitte des Wicklungsdrahts hergestellt sein. Eine Kontaktsicherheit kann dadurch erhöht sein. Einer der Schenkel kann eine quer zum Wicklungsdraht verlaufende Kontaktschneide zur elektrischen Verbindung mit dem Wicklungsdraht aufweisen. Durch Einsatz der Kontaktschneide kann in einem Arbeitsgang ein ummantelter Wicklungsdraht beim Einführen ins Kontaktelement abisoliert und am Kontaktelement gehalten werden. Durch die Orientierung der Kontaktschneide quer zum Wicklungsdraht kann eine verbesserte Abisolierung und in der Folge eine verbesserte Kontaktierung an der abisolierten Fläche erzielt werden.

Das Kontaktelement kann eine Aussparung mit einer Begrenzung aufweisen, an der die Kontaktschneide ausgeformt ist. Isolationsmaterial, das mittels der Kontaktschneide vom Wicklungsdraht entfernt wurde, kann so aus dem Klemmbereich des Kontaktelements gebracht werden, so dass es die Kontaktierung nicht behindert. Die Aussparung kann mit der Kontaktschneide zusammen ausgebildet sein.

Die Kontaktschneide kann in eine vom Kommutator abgewandte Richtung geneigt sein, so dass die Kontaktschneide ihre Schneidwirkung bei einem axialen Einschieben des Wicklungsdrahts zwischen die Schenkel entfaltet. Dadurch kann die Schneidwirkung der Kontaktschneide derart gesteigert werden, dass sich die Kontaktschneide beim axialen Einschieben des Wicklungsdrahts in den Wick-lungsdraht eingräbt und so für eine besonders gute Kontaktierung sorgt.

In einer besonders bevorzugten Ausführungsform sind wenigstens zwei Kontaktschneiden axial hintereinander angeordnet. Eine führende Kontaktschneide kann vornehmlich für eine Entfernung von Isolationsmaterial des Wicklungsdrahts sorgen, während eine folgende Kontaktschneide vornehmlich für eine Kontaktierung sorgen kann.

Nach einem zweiten Aspekt der Erfindung umfasst ein Verfahren zur Montage des beschriebenen Rotors Schritte des Anbringens des Kontaktelements am Leitsegment und des axialen Einschiebens des Wicklungsdrahtes zwischen die Schenkel des Kontaktelements.

Das axiale Einschieben des Wicklungsdrahts kann Teil eines Montageschritts sein, mit dem der Kommutator am Rotor angebracht wird. Die Kontaktierung des Wicklungsdrahts wird auf diese Weise ohne einen zusätzlichen Aufwand mit erledigt.

Vorzugsweise weist der Kommutator eine Vielzahl entlang eines Umfangs verteilte Leitsegmente auf, denen jeweils ein Kontaktelement zugeordnet ist, wobei das axiale Einscheiben von Wicklungsdraht gleichzeitig für alle Kontaktelemente erfolgt. Ein Kontaktierungsaufwand zwischen der Vielzahl von Kontaktelementen und entsprechenden Spulendrähten kann dadurch konstant bezüglich der Anzahl der Kontaktelemente sein. Auf diese Weise können Herstellungskosten reduziert sein.

In einer Ausführungsform können zur Herstellung des Kontaktelements Schritte des Einbringens einer Aussparung in einen Blechstreifen, des Anprägens der Kontaktschneide an eine Begrenzung der Aussparung und des Biegens des Blechstreifens in die Form einer längsgeschlitzten Hülse umfasst sein. Dabei können die Schritte zur Herstellung des Kontaktelements in einer beliebigen Reihenfolge ausgeführt werden.

### Kurze Beschreibung der Figuren

Die Erfindung wird nun mit Bezug auf die beigefügten Figuren genauer beschrieben, in denen:
- Figur 1: einen Teil eines Rotors;
- Figuren 2A und 2B: ein Kontaktelement nach Figur 1;
- Figuren 3A und 3B: Schnittdarstellungen des Kontaktelements der Figuren 1 und 2; und
- Figur 4: ein Ablaufdiagramm eines Verfahrens zur Montage des Rotors aus Figur 1
darstellt.

### Genaue Beschreibung von Ausführungsbeispielen

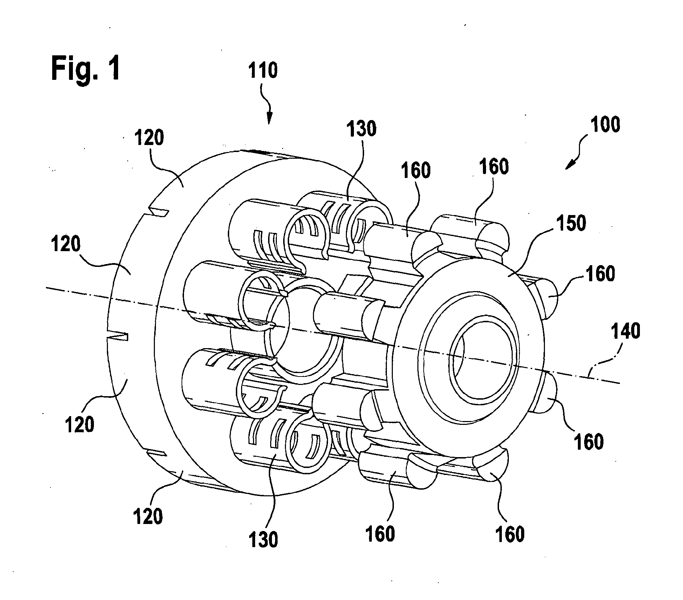

Figur 1 zeigt einen Rotor 100, von dem lediglich die für die Erfindung relevanten Teile dargestellt sind. Der Rotor 100 ist Teil eines Elektromotors. Der Rotor 100 umfasst einen Kommutator 110 mit einer Anzahl Leitsegmente 120. Die Leitsegmente 120 sind zur Kontaktierung mittels nicht dargestellter Bürsten ausgebildet, die eine Übertragung elektrischer Energie zu dem sich drehenden Rotor 100 sicher stellen. Der dargestellte Kommutator 110 ist zur Kontaktierung durch die Bürsten aus einer axialen Richtung eingerichtet, in einer anderen Ausführungsform kann jedoch auch eine radiale Kontaktierung erfolgen. Die Leitsegmente 120 bestehen vorzugsweise aus Kohle, können alternativ jedoch auch aus Kupfer oder einem anderen leitfähigen Material bestehen. Jedem der Leitsegmente 120 ist ein Kontaktelement 130 zugeordnet. Die Kontaktelemente 130 sind entlang eines Umfangs um eine Drehachse 140 des Rotors 100 angeordnet. Jedes der Kontaktelemente 130 hat die Form einer längsgeschlitzten Hülse, wobei der Schlitz jeweils radial nach innen auf die Drehachse 140 weist.

Ein Wicklungsträger 150 ist in einer Explosionsdarstellung entlang der Drehachse 140 nach rechts verschoben dargestellt. Der Wicklungsträger 150 weist eine Anzahl von Anlagekörpern 160 auf, die jeweils einen pilzförmigen Querschnitt haben und von der Drehachse 140 in radialer Richtung nach außen orientiert sind. Wird der Wicklungsträger 150 entlang der Drehachse 140 nach links verschoben, so wird jeweils einer der Wicklungsträger 150 von einem der Kontaktelemente 130 aufgenommen.

Nicht in Figur 1 dargestellt ist ein Abschnitt des Wicklungsträgers 150, der Wicklungen zur Erzeugung eines Magnetfelds am Rotor 100 trägt. Die Wicklungsdrähte der Wicklungen gehen an den Anlagekörpern 160 eine elektrische Verbindung mit den Kontaktelementen 130 ein.

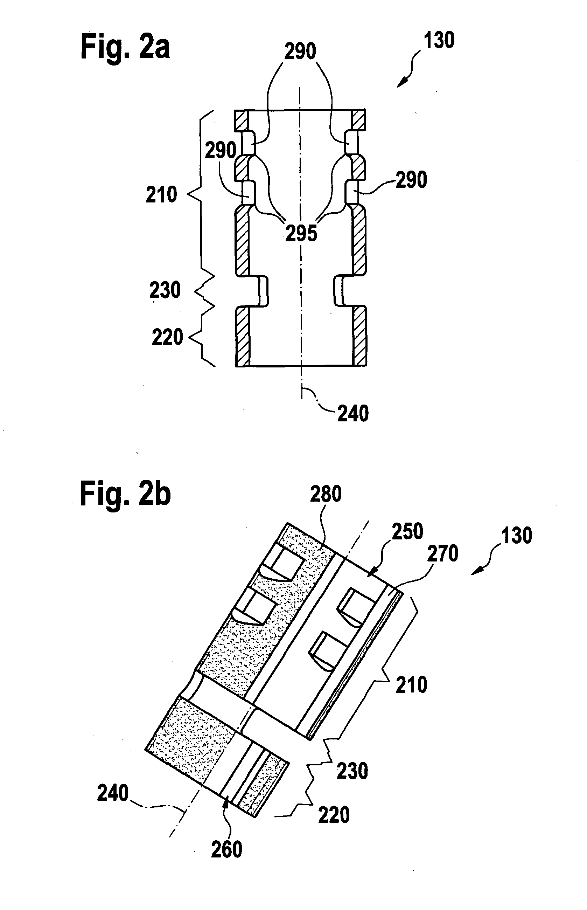

Figuren 2A und 2B zeigen das Kontaktelement 130 aus Figur 1. Figur 2A zeigt einen Längsschnitt und Figur 2B eine perspektivische Ansicht, wobei zum besseren Verständnis eine äußere Oberfläche des Kontaktelements 130 dunkel eingefärbt dargestellt ist.

Das Kontaktelement 130 geht aus einer zylindrischen Form hervor. Zwischen einem oberen Abschnitt 210 und einem unteren Abschnitt 220 befindet sich ein Übergangsbereich 230, der die Abschnitte 210 und 220 durch einen relativ schmalen Steg miteinander verbindet, der bezogen auf eine Längsachse 240 des Kontaktelements 130 in einem Winkelsegment von ca. 20° bis 30° ausgebildet ist. Der obere Abschnitt 210 weist einen parallel zur Längsachse 240 verlaufenden oberen Schlitz 250 auf. Der untere Abschnitt 220 weist einen entsprechenden unteren Schlitz 260 auf, der mit dem oberen Schlitz 250 fluchtet. Der obere Schlitz 250 ist breiter als der untere Schlitz 260, da Schenkel 270 und 280, die einander bezüglich des oberen Schlitzes 250 gegenüber liegen, nach außen gebogen sind, so dass sie in radialer Richtung von der Längsachse 240 weg weisen.
Der obere Abschnitt 210 und der untere Abschnitt 220 können unabhängig voneinander ihre Durchmesser variieren, wobei Federeigenschaften des Kontaktelements 130 einer derartigen Verformung entgegen wirken.

Im oberen Abschnitt 210 sind vier Aussparungen 290 eingebracht, wobei jeweils zwei Aussparungen 290 einander gegenüber liegen und jeweils zwei Aussparungen 290 axial hintereinander angeordnet sind. An einer unteren Begrenzung jeder Aussparung 290 ist das Kontaktelement 130 nach innen, auf die Längsachse 240 zu, gebogen, wodurch sich nach innen weisende Kontaktschneiden 295 ergeben. Die Kontaktschneiden 295 sind derart schräg gestellt, dass sie ihre Schneidwirkung hauptsächlich bezüglich eines von oben in das Kontaktelement 130 eingeführten Gegenstandes ausführen. Die Kontaktschneiden 295 können durch Kaltverformung, etwa durch Prägen, Dengeln oder Treiben geschärft sein, alternativ auch durch Schleifen.

In Figur 1 ist der untere Abschnitt 220 im Leitsegment 120 aufgenommen. Das Kontaktelement 130 kann mittels Klemmwirkung des unteren Abschnitts 220 mit dem Leitsegment verbunden sein. Zusätzlich oder alternativ kann das Kontaktelement 130 mit dem Leitsegment 120 verlötet, verklebt, verschweißt oder verpresst sein.

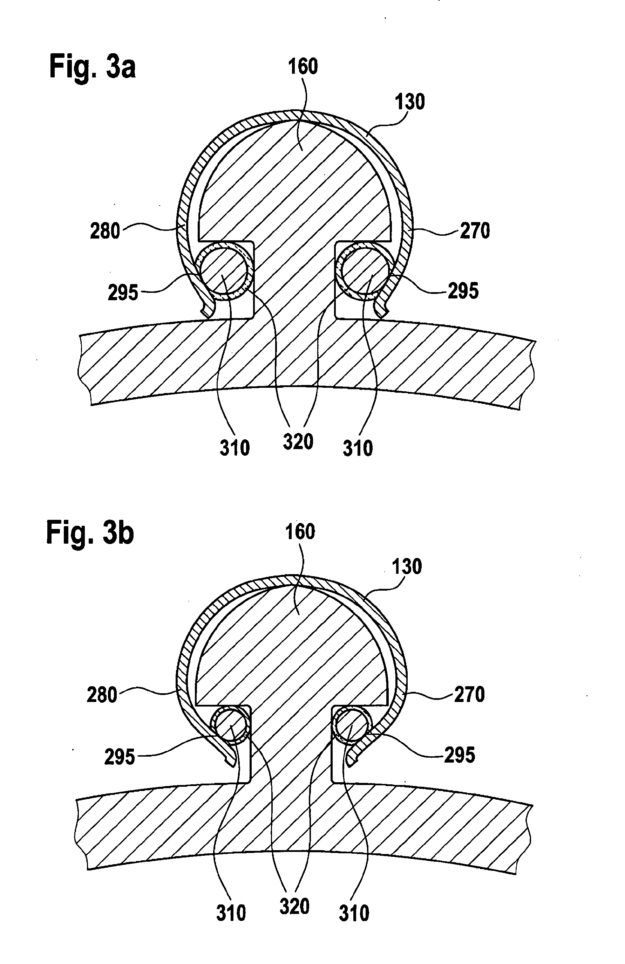

Figuren 3A und 3B zeigen Schnittdarstellungen des Kontaktelements 130 aus den Figuren 1 und 2. Die Blickrichtung erfolgt entlang der Längsachse 240 aus den Figuren 2A und 2B in der Höhe eines Paares von gegenüber liegenden Kontaktschneiden 295. Bezüglich Figur 1 ist der Wicklungsträger 150 durch axiales Verschieben in Eingriff mit den Kontaktelementen 130 aus Figur 1 gebracht. Die Darstellungen in den Figuren 3A und 3B betreffen jeweils nur eines der Kontaktelemente 130.

Ein Wicklungsdraht 310 umläuft den Anlagekörper 160 einmal, so dass er die Darstellungsebene zweimal schneidet. In einer anderen Ausführungsform umläuft der Wicklungsdraht 310 mehrmals den Anlagekörper 160. Der Wicklungsdraht 310 wird jeweils durch einen der Schenkel 270, 280 des Kontaktelements 130 gegen den Anlagekörper 160 gepresst. Der Anlagekörper 160 liegt oben an einer Innenseite des Kontaktelements 130 an. Durch seine pilzförmige Formgebung verhindert der Anlagekörper 160 ein Abgleiten des Wicklungsdrahts 310 bzw. Kontaktelements 130 nach oben. Im Bereich der nach außen gebogenen Enden der Schenkel 270, 280 wird der Wicklungsdraht 310 nach oben in Anlage mit dem Anlagekörper 160 gehalten.

Die Wicklungsdrähte 310 sind in den Figuren 3A und 3B unterschiedlich dick. Trotzdem wird durch die große Flexibilität des Kontaktelements 130 der Wicklungsdraht 310 in beiden Fällen durch das Kontaktelement 130 gegen den Anlagekörper 160 gepresst, wobei ein elektrischer Kontakt zwischen dem Kontaktelement 130 und dem Wicklungsdraht 310 hergestellt ist. Die Kontaktschneiden 295 haben den Wicklungsdraht 310 von seiner Isolationsschicht 320 befreit und den Wicklungsdraht 310 in einem äußeren Bereich leicht verformt, so dass eine ausreichende Anlagefläche im Bereich der Kontaktschneide 295 und dem Wicklungsdraht 310 besteht.

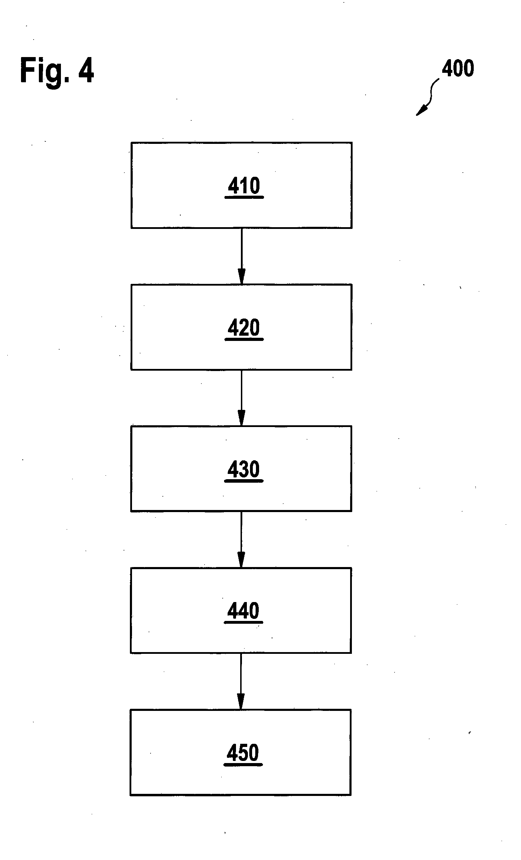

Figur 4 zeigt ein Ablaufdiagramm eines Verfahrens 400 zur Montage des Rotors 100 nach Figur 1. Das Verfahren 400 umfasst Schritte 410 bis 450.

Die ersten drei Schritte 410 bis 430 betreffen eine Herstellung des Kontaktelements 130. Zunächst werden die Aussparungen 290 in einen ebenen Blechstreifen eingebracht. Begrenzungen der Aussparungen 290 werden im folgenden Schritt 420 durch Anprägen in die Kontaktschneiden 295 umgeformt. Danach wird im Schritt 430 der Blechstreifen durch Rollen oder Biegen in die geschlitzte Hülsenform gebracht, die oben mit Bezug auf Figuren 2A und 2B genauer erläutert ist. Der Schritt 430 kann auch vor den Schritten 410 und 420 ausgeführt werden.

Im folgenden Schritt 440 wird das in den Schritten 410 bis 430 hergestellte Kontaktelement 130 an einem der Leitsegmente 120 aus Figur 1 angebracht. Der Schritt 440 kann ein Verlöten oder sonstiges leitfähiges Befestigen des Kontaktelements 130 am Leitsegment 120 umfassen. Schließlich wird im Schritt 450 der Wicklungsträger 150 entlang der Drehachse 140 nach links geschoben, bis die Anlagekörper 160 von den Kontaktelementen 130 aufgenommen sind. Dabei sind Spulendrähte 310 wenigstens einmal U-förmig um die Anlagekörper 160 herum gelegt, so dass jeweils ein Abschnitt eines der Spulendrähte 310 nacheinander zwei Kontaktschneiden 295 eines der Kontaktelemente 130 passiert und dadurch mit der Kontaktschneide 295 eine elektrische Verbindung eingeht. Durch den Schneidvorgang bedingte Zugkräfte auf den Wicklungsdraht 210 werden durch das U-förmige Umlaufen des Wicklungsdrahts 310 um den Anlagekörper 160 kompensiert.

Der erfindungsgemäße Rotor kann für unterschiedliche Elektromotoren verwendet werden, wobei unterschiedlich der Durchmesser des Wicklungsdrahts 310 varriert werden kann verwendet werden können und/oder die Wicklungsdrähte 310 einfach oder mehrfach um den Anlagekörper 160 herum gelegt sein können. Die Kontaktelemente 130 stellen einen sicheren Kontakt zu den Wicklungsdrähten 310 her, auch wenn diese unterschiedliche Durchmesser und/oder erhöhte Toleranzen bezüglich ihres Durchmessers oder ihrer Position aufweisen.

## Patentansprüche

1. Rotor (100) eines Elektromotors, umfassend:
- einen Kommutator (110) mit einem Leitsegment (120);
- eine Wicklung mit einem Wicklungsdraht (310), der in einem Anschlussbereich der Wicklung in axialer Richtung des Rotors (100) verläuft;
- ein Kontaktelement (130) zur elektrischen Verbindung des Leitsegments (120) mit dem Wicklungsdraht (310),
**dadurch gekennzeichnet, dass**
- das Kontaktelement (130) eine längs geschlitzte Hülse mit zwei gegenüberliegenden Schenkeln (170, 180) umfasst, zwischen denen der Wicklungsdraht (310) aufgenommen ist.

2. Rotor (100) nach Anspruch 1, **dadurch gekennzeichnet, dass** der Wicklungsdraht (310) im Bereich des Kontaktelements (130) ein Widerlager (160) umläuft, an das die Schenkel (170, 180) den Wicklungsdraht (310) pressen.

3. Rotor (100) nach einem der vorangehenden Ansprüche, **dadurch gekennzeichnet, dass** einer der Schenkel (170, 180) eine quer zum Wicklungsdraht (310) verlaufende Kontaktschneide (295) zur elektrischen Verbindung mit dem Wicklungsdraht (310) aufweist.

4. Rotor (100) nach Anspruch 3, **dadurch gekennzeichnet, dass** das Kontaktelement (130) eine Aussparung (290) mit einer Begrenzung aufweist, an der die Kontaktschneide (295) ausgeformt ist.

5. Rotor (100) nach Anspruch 3 oder 4, **dadurch gekennzeichnet, dass** die Korntaktschneide (295) in eine vom Kommutator (110) abgewandte Richtung geneigt ist, so dass die Kontaktschneide (295) ihre Schneidwirkung bei einem axialen Einschieben des Wicklungsdrahts (310) zwischen die Schenkel (170, 180) entfaltet.

6. Rotor (100) nach einem der Ansprüche 3 bis 5, **dadurch gekennzeichnet, dass** wenigstens zwei Kontaktschneiden (295) axial hintereinander angeordnet sind.

7. Verfahren (400) zur Montage des Rotors (100) nach einem der vorangehenden Ansprüche, folgende Schritte umfassend:
- Anbringen (440) des Kontaktelements (130) am Leitsegment (120); und
- axiales Einschieben (450) des Wicklungsdrahts (310) zwischen die Schenkel (170, 180) des Kontaktelements (130).

8. Verfahren (400) nach Anspruch 8, wobei der Kommutator eine Vielzahl entlang eines Umfangs verteilte Leitsegmente (120) aufweist, denen jeweils ein Kontaktelement (130) zugeordnet ist, und das axiale Einschieben von Wicklungsdraht (310) gleichzeitig für alle Kontaktelemente (130) erfolgt.

9. Verfahren (400) nach Anspruch 8 oder 9, ferner umfassend folgende vorausgehenden Schritte zur Erstellung des Kontaktelements (130):
- Einbringen (410) einer Aussparung (290) in einen Blechstreifen;
- Anprägen (420) der Kontaktschneide (295) an eine Begrenzung der Aussparung (290); und
- Biegen (430) des Blechstreifens in die Form einer längs geschlitzten Hülse.

## Claims

1. Rotor (100) of an electric motor, comprising:
- a commutator (110) having a guide segment (120);
- a winding having a winding wire (310) which runs in a connection region of the winding in the axial direction of the rotor (100);
- a contact element (130) for electrically connecting the guide segment (120) to the winding wire (310),
**characterized in that**
- the contact element (130) comprises a longitudinally slotted sleeve having two opposite limbs (170, 180) between which the winding wire (310) is received.

2. Rotor (100) according to Claim 1, **characterized in that** the winding wire (310) runs around an abutment (160) in the region of the contact element (130), the limbs (170, 180) pressing the winding wire (310) against the said abutment.

3. Rotor (100) according to either of the preceding claims, **characterized in that** one of the limbs (170, 180) has a contact blade (295), which runs transverse to the winding wire (310), for electrical connection to the winding wire (310).

4. Rotor (100) according to Claim 3, **characterized in that** the contact element (130) has a cutout (290) with a boundary on which the contact blade (295) is formed.

5. Rotor (100) according to Claim 3 or 4, **characterized in that** the contact blade (295) is inclined in a direction which is averted from the commutator (110), so that the contact blade (295) deploys its cutting effect when the winding wire (310) is axially inserted between the limbs (170, 180).

6. Rotor (100) according to one of Claims 3 to 5, **characterized in that** at least two contact blades (295) are arranged axially one behind the other.

7. Method (400) for assembling the rotor (100) according to one of the preceding claims, comprising the following steps:
- fitting (440) the contact element (130) to the guide segment (120); and
- axially inserting (450) the winding wire (310) between the limbs (170, 180) of the contact element (130).

8. Method (400) according to Claim 8, wherein the commutator has a large number of guide segments (120) which are distributed along a circumference, each of the said guide segments having an associated contact element (130), and winding wire (310) being axially inserted at the same time for all contact elements (130).

9. Method (400) according to Claim 8 or 9, further comprising the following preliminary steps for creating the contact element (130):
- forming (410) a cutout (290) in a sheet-metal strip;
- stamping (420) the contact blade (295) onto a boundary of the cutout (290); and
- bending (430) the sheet-metal strip into the shape of a longitudinally slotted sleeve.

## Revendications

1. Rotor (100) d'un moteur électrique, comprenant :
- un collecteur (110) muni d'un segment pilote (120) ;
- un enroulement muni d'un fil d'enroulement (310) qui s'étend dans une zone de raccordement de l'enroulement dans la direction axiale du rotor (100) ;
- un élément de contact (130) servant à la liaison électrique du segment pilote (120) avec le fil d'enroulement (310),
**caractérisé en ce que**
- l'élément de contact (130) comprend un manchon fendu en longueur comprenant deux branches (170, 180) opposées entre lesquelles est accueilli le fil d'enroulement (310).

2. Rotor (100) selon la revendication 1, **caractérisé en ce que** le fil d'enroulement (310) s'étend autour d'une butée (160) dans la zone de l'élément de contact (130), contre laquelle butée les branches (170, 180) pressent le fil d'enroulement (310).

3. Rotor (100) selon l'une des revendications précédentes, **caractérisé en ce que** l'une des branches (170, 180) présente une lame de contact (295) qui s'étend transversalement au fil d'enroulement (310) servant à la liaison électrique avec le fil d'enroulement (310).

4. Rotor (100) selon la revendication 3, **caractérisé en ce que** l'élément de contact (130) présente une cavité (290) avec une délimitation au niveau de laquelle est formée la lame de contact (295).

5. Rotor (100) selon la revendication 3 ou 4, **caractérisé en ce que** la lame de contact (295) est inclinée dans une direction à l'opposé du collecteur (110), de sorte que la lame de contact (295) déploie son effet de coupe lors d'une insertion axiale du fil d'enroulement (310) entre les branches (170, 180).

6. Rotor (100) selon l'une des revendications 3 à 5, **caractérisé en ce qu'**au moins deux lames de contact (295) sont disposées l'une derrière l'autre dans le sens axial.

7. Procédé (400) de montage du rotor (100) selon l'une des revendications précédentes, comprenant les étapes suivantes :
- montage (440) de l'élément de contact (130) sur le segment pilote (120) ; et
- insertion axiale (450) du fil d'enroulement (310) entre les branches (170, 180) de l'élément de contact (130).

8. Procédé (400) selon la revendication 8, selon lequel le collecteur présente une pluralité de segments pilotes (120) distribués le long d'une circonférence, auxquels est respectivement associé un élément de contact (130), et l'insertion axiale du fil d'enroulement (310) s'effectue simultanément pour tous les éléments de contact (130).

9. Procédé (400) selon la revendication 8 ou 9, comprenant en outre les étapes antérieures suivantes destinées à produire l'élément de contact (130) :
- aménagement (410) d'une cavité (290) dans une bande de tôle ;
- estampage (420) de la lame de contact (295) au niveau d'une délimitation de la cavité (290) ; et
- pliage (430) de la bande de tôle dans la forme d'un manchon fendu en longueur.
